(19)

Europäisches Patentamt

European Patent Office

Office européen des brevets

(11) **EP 2 945 297 B1**

(12) **EUROPEAN PATENT SPECIFICATION**

(45) Date of publication and mention
of the grant of the patent:
**22.03.2017 Bulletin 2017/12**

(51) Int Cl.:
**H04B 3/46** *(2015.01)*    **H04M 3/30** *(2006.01)*

(21) Application number: **14305706.5**

(22) Date of filing: **14.05.2014**

(54) **Method and device for estimating an attainable bitrate of an electrical telecommunication line**

Verfahren und Vorrichtung zur Schätzung einer erzielbaren Bitrate einer elektrischen Fernmeldeleitung

Procédé et dispositif pour estimer un débit binaire réalisable d'une ligne de télécommunication électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.11.2015 Bulletin 2015/47**

(73) Proprietor: **ALCATEL LUCENT**
**92100 Boulogne-Billancourt (FR)**

(72) Inventors:
• **Dardenne, Xavier**
**6041 Gosselies (BE)**

• **Drooghaag, Benoît**
**6041 Gosselies (BE)**

(74) Representative: **Wetzel, Emmanuelle et al**
**Alcatel-Lucent**
**Intellectual Property Business Group**
**70430 Stuttgart (DE)**

(56) References cited:
**WO-A1-2006/039419    WO-A1-2011/065945**

• **HEDLUND ERIC ET AL: "DSL Loop Test", TELEPHONY, CHICAGO, IL, US, vol. 235, no. 8, 24 August 1998 (1998-08-24), pages 48-52, XP002147002, ISSN: 0040-2656**

## Description

### Field of the invention

The present invention refers to a method and a device for estimating an attainable bitrate of an electrical telecommunication line. Furthermore, the invention refers to a monitoring station for an access network comprising an electrical telecommunication line and to a computer program product for executing such a method.

### Background

Methods for estimating an attainable bitrate of a telecommunication line are known. Such methods may be applied by a network operator in order to decide whether an upgrade of a Digital Subscriber Line (DSL) to a more powerful transmission technology would improve the performance of the line.
In particular, it is known to use Dual Ended Line Testing (DELT) measurements to obtain operational parameters of the line. The attainable bitrate can be estimated rather accurately from these operational parameters. However, DELT requires that the line under test be in service, i.e. the two ends of the line must be connected to DSL Access Multiplexer (DSLAM) and a DSL modem, respectively. If the line is currently unused or is used for analogue telephony only then DELT is not available.

Single Ended Line Testing (SELT) is a reflectometry-based test method that can be applied on telecommunication lines to which no DSL modem is connected. However, SELT does not provide accurate enough information related to the noise level on the line under test. As a consequence, SELT cannot predict the attainable bitrate accurately.

WO 2006/039419 A1 with title "METHOD FOR TESTING DSL CAPABILITY OF TELEPHONE LINES" discloses a system and method for performing DSL assessments of a telephone line along a prescribed test path, wherein the system includes a loop diagnostic test unit adapted for testing said telephone line using narrow-band and mid-band frequency test signals.

WO 2011/065945 A1 with title "METHOD AND APPARATUS FOR DETECTION OF WIRING DEFECTS IN A DIGITAL SUBSCRIBER LINE" discloses a method for detecting a defect in wiring in a DSL system based on collected data, wherein a line is analyzed for a wiring defect based on the collected data.

### Summary

Thus, the object of the present invention is to provide a method and device for estimating an attainable bitrate of a telecommunication line that can be used for lines to which no DSL modem is connected and that deliver a more accurate value of the estimated attainable bitrate.

The object of the present invention is achieved with the device of claim 1 and the method of claim 4.

According to an embodiment of the present invention, a method for estimating an attainable bitrate of an electrical telecommunication line is provided, the method comprising estimating a direct transfer function of the telecommunication line; estimating a noise coupled into the telecommunication line; and calculating a bitrate value characterizing the attainable bitrate from the transfer function and the noise; wherein the method further comprises determining at least one unbalance characteristic that describes an unbalance of the telecommunication line, wherein said estimating the noise comprises determining the noise from the unbalance characteristic.

By determining the unbalance characteristic and using the unbalance characteristic to determine the noise, the attainable bitrate can be estimated particularly accurately in cases where no DSL modem (or a similar terminal side customer side termination node) is connected to the line. A network operator may apply the method to accurately estimate the attainable bitrate for a line which is currently unused or used for different services than DSL. Based on the so estimated attainable bitrate, the operator may then decide which service to offer on this specific line. For example, in case of a high attainable bitrate, Internet Protocol Television (IPTV) service could be offered, including several High Definition Television (HDTV) channels. If the attainable bitrate is not so high, then only SDTV would be proposed, or even only HSI (High Speed Internet) service without television.

In an embodiment, the determining the noise comprises estimating a crosstalk transfer function from the at least one unbalance characteristic. The crosstalk transfer function describes how the line converts noise around the line (ambient noise) into a signal within the line and is thus well-suited for estimating the noise coupled into the line.

In an embodiment, the telecommunication line comprises a pair of a first conductor and a second conductor and wherein the method comprises calculating the unbalance characteristic from a first capacitance of the first conductor to ground and a second capacitance of the second conductor to ground. The first and second capacitances are simple to measure. Moreover, Metallic Line Testing (MELT) procedures available in most DSL systems may be used for obtaining the values of the first and second capacitances. Accordingly, it is proposed that the method comprises performing a MELT procedure for determining the unbalance characteristic.

In an embodiment, the calculating comprises determining a difference between the first capacitance and the second capacitance. Such a difference is a metric of a degree of unbalance of the line. The calculating may include determining an absolute value of a relative deviation of the first capacitance from the second capacitance. Moreover, said absolute value of the relative deviation may be converted into a percentage number, which characterizes the unbalance of the line.

In the embodiment, the unbalance characteristic is a Longitudinal Conversion Loss (LCL), which describes a ratio of a common mode signal to a differential mode signal, the differential mode signal being measured at an end of the transmission line while feeding the common mode signal to the same end of the transmission line. The LCL is an even more accurate metric of the unbalance because it is directly related to the degree of transmission mode conversion from the common mode to the differential mode of the line. Mode conversion is the main reason for crosstalk between neighboring lines.

In the embodiment, the method comprises estimating a length of the telecommunication line (loop length) and estimating the direct transfer function based on the length.

In the embodiment, the method comprises estimating a length of the telecommunication line based on the first capacitance, the second capacitance and a common mode capacitance per length unit of the telecommunication line. Any values indicated per length unit of the line are herein referred to as lineic values. Accordingly, the common mode capacitance per length unit of the line is also referred to as lineic common mode capacitance. The lineic common mode capacitance is generally known and/or may be looked-up in technical specifications (e.g. a datasheet) of a used cable.

In an embodiment, the estimating the noise coupled into the telecommunication line is based on an estimated ambient noise value, which ambient noise value describes a power level of noise present around the telecommunication line. In one embodiment, the value may be a scalar value. In another embodiment, the value may be a frequency dependent vector. For example, each element of the vector may characterize the ambient noise level within a frequency sub-band of the whole frequency band used for data transmission over the line.

In an embodiment, the method comprises determining at least one further characteristic of a further telecommunication line extending next to the telecommunication line, preferably within the same binder, and determining the ambient noise value from the at least one further characteristic. Preferably, the further line is a line to which an operating DSL modem is connected so that more detailed tests including DELT may be performed on the further line.

In an embodiment, the method comprises computing a further noise coupled into the further telecommunication line from the at least one further characteristic. This computation may be performed by applying Shannon's law on a further characteristic that describes the bitrate of the further line.

In an embodiment, the at least one further characteristic describes a Quiet Line Noise (QLN) of the further telecommunication line and the method comprises using the quiet line noise - or a value derived from the quiet line noise - as the further noise.

In an embodiment, the method comprises estimating a further crosstalk transfer function of the further line based on the further characteristic and determining the ambient noise value from the further crosstalk transfer function.

According to another embodiment of the present invention, a device for estimating an attainable bitrate of an electrical telecommunication line is provided, the device being operable for estimating a direct transfer function of the telecommunication line; estimating a noise coupled into the telecommunication line; and calculating a bitrate value characterizing the attainable bitrate from the transfer function and the noise; wherein the method device if further operable for determining at least one unbalance characteristic that describes an unbalance of the telecommunication line, wherein said estimating the noise comprises determining the noise from the unbalance characteristic.

In an embodiment, the device is operable, preferably programmed, for executing a method for estimating an attainable bitrate of an electrical telecommunication line described herein.

According to yet another embodiment of the present invention, a monitoring station for an access network comprising an electrical telecommunication line is provided, wherein the monitoring station comprises a device for estimating an attainable bitrate of an electrical telecommunication line described herein

According to still another embodiment of the present invention, a computer program product, preferably a computer readable storage medium, is provided, the computer program product comprising a computer program that is programmed for executing a method for estimating an attainable bitrate of an electrical telecommunication line described herein. The storage medium may include magnetic storage (e.g. discs or tapes), optical storage (e.g. optical discs) and/or semiconductor storage (e.g. RAM, ROM, Flashrom, etc.). Moreover, the computer program product may be provided, e.g. by a server, for download over a network such as the Internet.

**Brief description of the figures**

Exemplary embodiments and further advantages of the present invention are shown in the Figures and described in detail hereinafter.

Figure 1   shows an exemplary fixed access network comprising multiple telecommunication lines;
Figure 2   shows a diagram of a telecommunication line with voltages and currents according to different transmission modes;
Figure 3   shows a flowchart of a method for estimating an attainable bitrate of an electrical telecommunication line of the network shown of Figure 1;
Figure 4   illustrates a model of the telecommunication line;
Figure 5   shows a scatter plot of an average crosstalk level against an unbalance characteristic;
Figure 6   shows a scatter plot similar to the plot of Figure 4 with another unbalance characteristic being applied;
Figure 7   shows a flowchart of a step of the method of estimating the attainable bitrate according to one embodiment; and
Figure 8   shows a flowchart similar the flowchart of Figure 7 according to another embodiment.

## Description of the embodiments

The description and drawings merely illustrate the principles of the invention.

Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

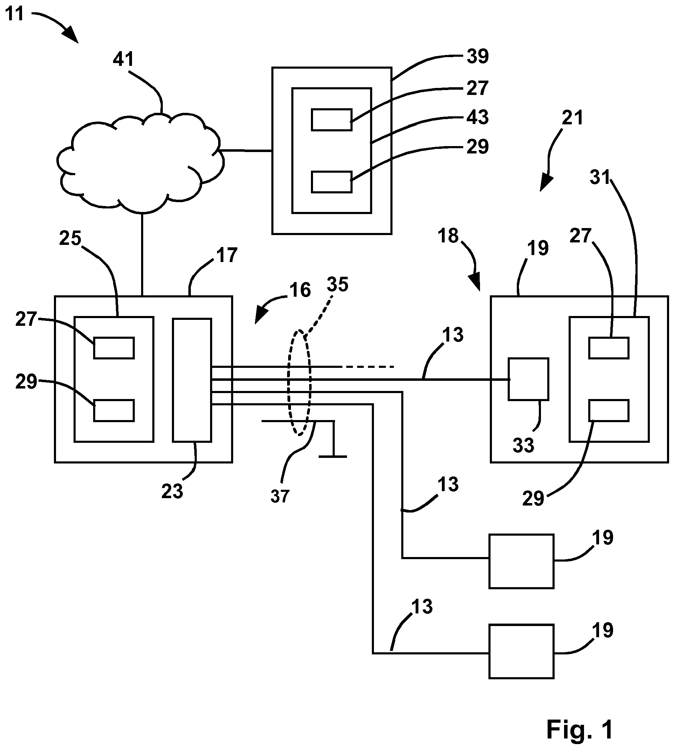

Figure 1 shows a communication network 11 comprising telecommunication lines 13, at least one telecommunication line 13 having a pair of electrical conductors. A first end 16 of the line 13 is connected to a network side termination node of the network 11, further referred to as access node 17, and a second end 18 of the line 13 is connected to a terminal side termination node 19 of the network 11. The terminal side termination node 19 may be part of customer premises equipment (CPE 21) of the network 11.

In the shown embodiment, the telecommunication line 13 is a Digital Subscriber Line (DSL), such as VDSL2, ADSLx or the like. Consequently, the access node 17 may comprise a DSL Access Multiplexer (DSLAM). The terminal side termination node 19 may be a DSL modem or include a DSL modem.

The access node 17 has first modem circuitry 23 to which the first end 16 of the lines 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least some lines 13 are part of a binder 35 and extend in parallel to each other. The binder 35 may comprise an electrically conductive, preferably metallic, shielding 37 that may be grounded as depicted in Figure 1. Because at least some lines 13 extend in parallel to each other in the binder 35, crosstalk between the lines 13 may occur.

Furthermore, the network 11 may comprise an optional monitoring station 39 connected e. g. via an interconnection network 41 to at least one of the nodes 17, 19 such that the station 39 can communicate with at least one of the nodes 17, 19, preferably the access node 17. The monitoring station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server computer, a personal computer, a handheld computer such as a PDA or cell phone, etc.

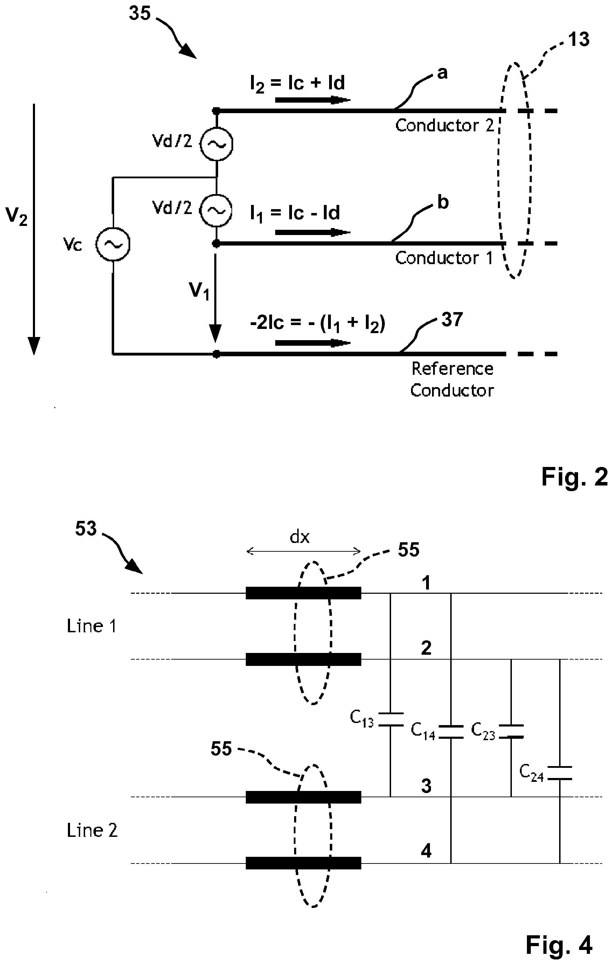

As shown in Figure 2, a telecommunication line 13 may comprise a pair of conductors a and b. Typically, the conductors are wires a, b of a twisted wire pair arranged along further wire pairs of other lines 13 in the binder 35. For the sake of simplicity, in Figure 2 only one wire pair a, b of a single line 13 is shown. The binder 35 may have a reference conductor such as the shielding 37.

Figure 2 also illustrates voltages $V_c$, $V_d$ and currents $I_c$, $I_d$ at or within the individual conductors a, b when a Transverse Electromagnetic (TEM) wave propagates along the line 13. A TEM wave propagating along the line in a differential mode corresponds to a voltage difference signal $V_d$ between the two conductors a, b running through the line 13. In contrast to the differential mode, a common mode corresponds to a voltage $V_c$ between the two wires a, b and a reference potential of a conductor different to the two conductors a, b like the electrical potential at the reference conductor (e.g. shielding 37). Figure 2 shows how the current $I_c$ and voltage $V_c$ of the common mode can be calculated from the current $I_d$ and voltage $V_d$ of the differential mode and vice versa. V1 and V2 are the voltages between the first conductor a and the second conductor b and the reference conductor 37, respectively. The currents flowing through the two lines a, b are denoted respectively with I1 and I2.

In general, TEM waves can propagate along a transmission line 13 having at least two conductors. When N $\geq$ 2 conductors are available then N-1 transmission modes are possible. Although transmission modes could be arbitrarily defined, in practical applications of transmission line theory, the differential mode related to a pair of twisted wires a, b and the common mode related to both wires a, b of a pair and the reference potential at the reference conductor 37 are considered.

Transmission systems using wire pairs a, b for data transmission are normally designed such that the individual lines 13 are excited in the differential mode only in order to minimize electromagnetic radiation emitted by the lines 13. When using twisted pair lines 13, the emitted radiation is particularly low. Moreover, a pair of wires a, b running closely next to each other pick up ambient electromagnetic radiation or noise and propagate it in the differential mode to a quite little extent only. The most part of picked-up ambient noise is propagated along the line 13 in common mode. A receiver connected to the line 13 that is susceptible to the differential mode signal and suppresses the common mode signal effectively will see a good signal to noise ratio even if the line 13 is subject to ambient noise.

Since a telecommunication line 13 having a wire pair a, b cannot be manufactured physically and geometrically perfectly, a certain portion of a differential signal is converted to a common mode signal while the signal is propagating along the line 13. This phenomenon is called "mode conversion". The physical and geometrical imperfectness of the line is referred to as "unbalance". The more unbalanced a certain line 13 is the greater is a portion of the energy of a signal propagated along the line that is subject to mode conversion. In case of multiple lines 13 arranged in parallel e.g. in the binder 35, the unbalance leads to crosstalk between the individual lines 13. A line 13 that causes crosstalk (disturber) converts the differential signal fed into the disturber to electromagnetic radiation. Another not perfectly balanced line (victim) picks up the radiation as a common mode signal and converts it to a differential mode signal which then arrives at a receiver connected to the victim line. As a consequence, the receiver receives not only the wanted signal fed into the victim line but also the signal fed into the disturber line. The coupling between neighboring lines can be quantified by means of a crosstalk transfer function Hxtalk(f). The transfer function of a signal transmitted over the same line 13 is herein referred to as direct transfer function Hlog(f).

The transfer functions Hlog, Hxtalk may have a logarithmic scale (although the invention may also be applied in connection with linear scaled transfer functions) and may be represented as frequency dependent vectors. In the embodiments described herein, a multicarrier modulations scheme is applied for transmissions over the telecommunication lines, e.g. Discrete Multitone Modulation (DMT). Each element of the frequency dependent vectors may thus correspond to a center frequency of a subcarrier used in the multicarrier modulation scheme. However, in other embodiments, the frequency dependent vectors may not be aligned to a frequency grid imposed by the used modulation scheme.

The characteristics of a telecommunication line 13 described by the direct transfer function Hlog and the crosstalk transfer function Hxtalk and by other parameters determine the performance, in particular the bitrate, achievable on the line 13. For example, the network operator may check based on the estimated attainable bitrate which services can be offered on a given line 13 before activating the line 13. For instance, the estimated attainable bitrate could be used to decide on whether high bitrate services like TV services or even HDTV services should be offered to a customer connected to the access network 11 over the line 13. In addition, it is possible to check if high bitrate data transmission technologies like VDSL2 can provide with a better performance than older technologies like ADSLx. For this reason, network operators often perform tests before upgrading a line 13 to a newer technology. These tests rely on measurement procedures carried out by the access node 17 and the DSL modem 19. The tests typically include estimating an achievable bitrate of the line 13 under test.

In cases, where no xDSL is installed for a certain line 13, these tests relying on the presence of a DSL modem 19 cannot be performed. In the following, a method is described that allows to estimate the attainable bitrate of a line 13 to which no DSL modem 19 is connected. Based on the estimated attainable bitrate determined using the method, the operator may decide on which type of service could be offered on a given line 13, and/or whether a high bitrate transmission technology should be deployed for the line 13 or whether it is better to deploy a more mature technology for cost reasons.

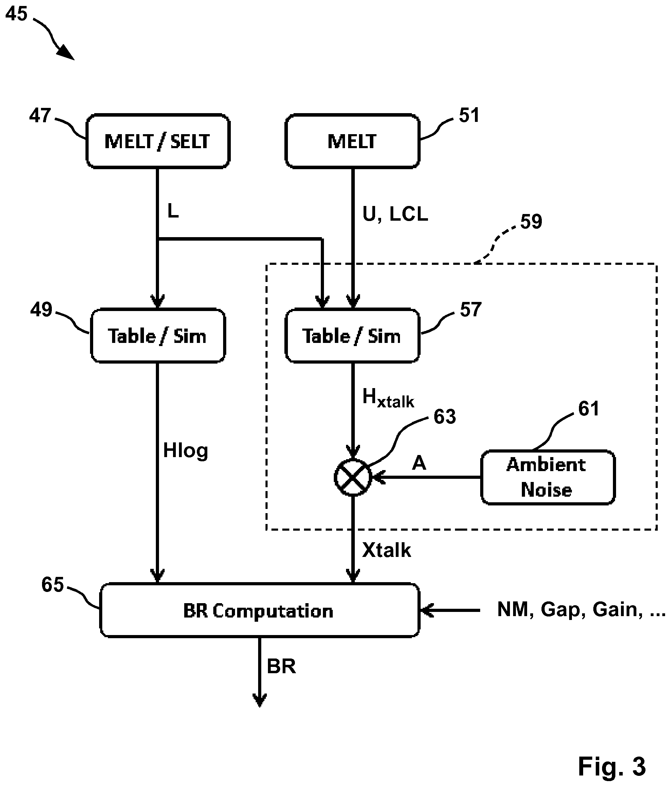

Figure 3 shows a flowchart of the method 45. The method 45 may be executed e.g. on the monitoring station 39. Accordingly, the third controller 43 may be arranged, preferably programmed, for executing the method 45. However, the method 45 may also be executed on any element of the network 11 or any remote element that has access to the network 11. For example, the first controller 25 and/or the second controller 31 may be arranged, preferably programmed, for executing the method 45.

The method 45 comprises a step 47 of estimating a length L of the line 13 under test (loop length L). In one embodiment, the loop length L is obtained based on Single Ended Line Testing (SELT) performed on the line 13 under test. SELT comprises time or frequency domain reflectometry measurements. When using SELT, the loop length L may be calculated from the result of the reflectometry measurement and the known velocity of signal propagation of the used line 13.

In another embodiment, step 47 may estimate the loop length L based on Metallic Line Testing (MELT). MELT comprises measurements of electrical resistances and capacitances between the conductors a, b of a line and/or between these conductors a, b and the possibly grounded reference conductor 37. For example, the so-called common mode capacitances $C_{ag}$, $C_{bg}$ of the line 13 under test may be measured using MELT. $C_{ag}$ is the capacitance of the first conductor *a* to ground and $C_{bg}$ is the capacitance of the second conductor *b* to ground. Furthermore, a lineic common mode capacitance $C_g'$ (i.e. common mode capacitance per length unit) of the used cable 35 may be considered for calculating the loop length L, e.g. by using the following equation.

$$L = \frac{C_{ag} + C_{bg}}{2 \cdot C_g'} \qquad (1)$$

The value of the lineic common mode capacitance $C_g'$ is a cable property, which is typically about 50 nF/km.

The reflectometry-based approach relying on SELT produces more accurate values of the loop length in most cases. Therefore, in yet another embodiment, step 47 may check if SELT is available and determine the loop length L based on SELT if so and use the above-described MELT-base approach otherwise. In addition, in a further embodiment, step 47 may determine an intermediate loop length value based on SELT and on MELT if both SELT and MELT are available and calculate the loop length L based on the two intermediate loop length values, e.g. by calculating an average of the two intermediate loop length values. The average may be calculated by applying appropriately chosen weights to the individual intermediate loop length values. Both SELT as well as MELT are described in more detail in the ITU-T recommendation G.996.2. It should be noted that the two conductors of the line 13 are referred to as *t* or *tip* and *r* or *ring* in G.996.2 rather than *a* and *b*.

The method 45 comprises a further step 49 comprising estimating the direct transfer function Hlog of the line 13 under test. Step 49 may comprise applying a mathematical model of the cable 35 (cable model) for estimating direct transfer function Hlog based on the loop length L. The cable model - or at least parameters of the cable model - may be obtained from technical specifications of the used cable which may be available in a datasheet issued by the manufacturer of the cable.

A step 51 of the method 45 comprises calculating at least one unbalance characteristic of the line 13, which unbalance characteristic describes the degree unbalance (or alternatively the degree of balance) of the line 13.

In one embodiment, the unbalance characteristic is a metric U calculated from the common mode capacitances $C_{ag}$ and $C_{bg}$, which may be measured using MELT. For example, the metric U may be expressed as a percentage $0 \leq U \leq 100$ as follows.

$$U = 2\frac{|C_{ag} - C_{bg}|}{C_{ag} + C_{bg}} \cdot 100 \qquad (2)$$

That is, the metric U characterizes an absolute value of a relative deviation of the first common mode capacitance $C_{ag}$ from the second common mode capacitance $C_{bg}$. However, in other embodiments, the metric U may be defined differently. In some embodiments, the metric U depends from the difference $C_{ag}$ - $C_{bg}$ between the first common mode capacitance $C_{ag}$ and the second common mode capacitance $C_{bg}$ or from the absolute value $|C_{ag}$ - $C_{bg}|$ of this difference.

The inventors have performed simulations in order to evaluate the metric U. To this end, a model based on the Multi-Conductor Transmission Line (MTL) theory has been applied. For example, two coupled transmission lines 13 may be modeled as a cascade of identical unit cells of infinitesimal length dx. One of these cells 53 is shown in Figure 4. The unit cell comprises pieces 55 of ideal (perfectly balanced) transmission lines 13 of infinitesimal length dx and coupling capacitances $C_{13}$, $C_{14}$, $C_{23}$, $C_{24}$, which model the coupling of the two lines 13 with each other, where $C_{ij} = C_{ij}' dx$ with $C_{ij}'$ denoting the lineic (per length unit) value of the respective coupling capacitance between the wires i and j.

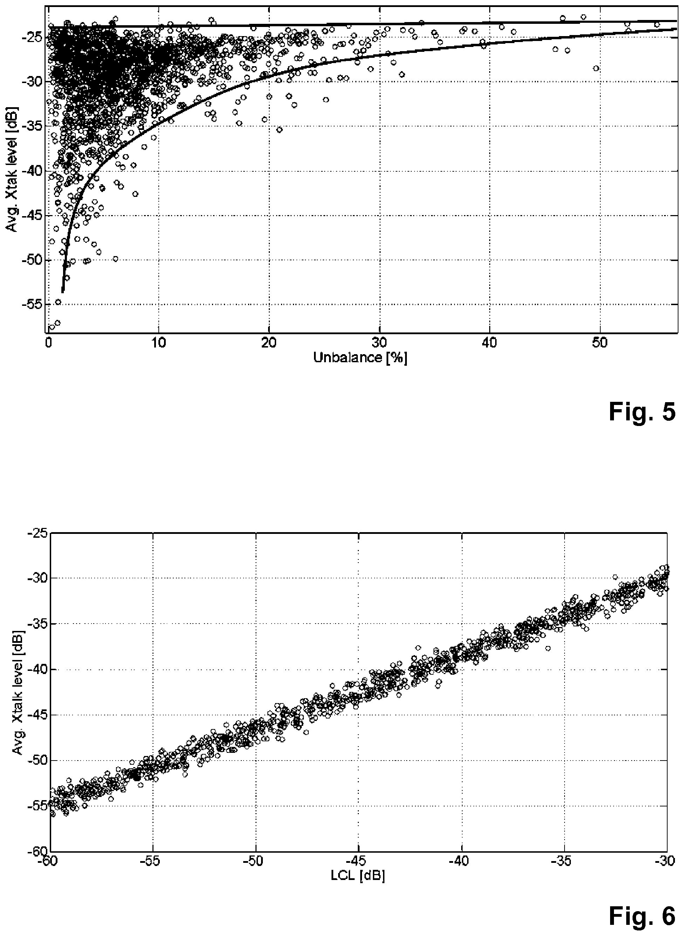

The simulations have been performed for a large number of pairs of two lines 13, with randomly chosen coupling capacitances $C_{13}$, $C_{14}$, $C_{23}$, $C_{24}$. During the simulations, crosstalk between the two lines 13 has been calculated. Figure 5 shows a scatter plot of the average crosstalk level in dB against the unbalance metric U for each simulated line 13. The average crosstalk level is the crosstalk level averaged over the frequency band used for data transmission. It can be observed that the crosstalk level of most lines 13 is between the two solid lines shown in the diagram. The maximum average crosstalk level (upper solid line) is almost constant, whereas the minimum crosstalk level (lower solid line) depends on the value of the unbalance metric U. As a consequence, the crosstalk level can be predicted with high accuracy for high values of the metric U for which the two solid lines run rather closely to each other. For low values of the metric U, the accuracy is not so high. The reason of the limited accuracy is that the MELT can measure the capacitances $C_{ag}$, $C_{bg}$ at an end of the line 13 only and is not able to determine if or how the lineic coupling capacitances $C_{ij}$ vary along the line 13.

A step 57 of the method 45 estimates the crosstalk transfer function Hxtalk of the lines 13 under test. Step 57 is part of a block 59 for estimating the noise coupled into the line 13 from the unbalance characteristic. In practical access networks, where the lines 13 run parallel to each other in the binder 35, crosstalk caused by neighboring lines 13 is the main reason for the noise. Therefore, the noise is labeled with Xtalk in Figure 3.

In one embodiment, step 57 uses the unbalance metric U as the crosstalk characteristic and estimates the crosstalk transfer function Hxtalk from the metric U. For example, step 57 may simulate a pair of lines 13 using the above described MTL-based model in order to calculate the crosstalk for different frequencies (e.g. for the center frequencies of the used DMT subcarriers). As illustrated in Figure 5, a single value of the unbalance characteristic may correspond to multiple crosstalk levels. In such cases, a mean value, a minimum value or a maximum value of the multiple crosstalk levels may used as the estimated as the value of the crosstalk transfer function Hxtalk for the respective frequency $f_i$.

Instead of performing the simulations online, i.e. during execution of the method 45, the simulations may also be performed before the method 45 is executed and results of the simulations may be stored in at least one table. Step 57 may access the at least one pre-computed table in order to get the crosstalk transfer function Hxtalk. The table may be indexed by predefined values or ranges ("bins") of the unbalance characteristic.

In another embodiment, step 57 uses a Longitudinal Conversion Loss (LCL) as the unbalance characteristic. In this embodiment, step 51 determines the LCL e.g. by means of MELT. The LCL characterizes a signal level of a differential mode signal appearing at an end of the line when the line is excited in common mode only. The LCL therefore quantifies the mode conversion performed by the line 13 under test. As a consequence, the noise coupled into the lines is basically linear or proportional to the LCL. This is illustrated in Figure 6, which shows a scatter plot of the average crosstalk level in dB over the LCL in dB. As can be seen in Figure 6, the average crosstalk level can be estimated comparatively accurately even for small values of the LCL. Step 57 may estimate the crosstalk transfer function Hxtalk by means of online simulation or pre-computed tables. For example, coefficients of a linear or proportional function may be retrieved from a pre-computed table, which coefficients may be used in step 57 for determining values of the crosstalk transfer function Hxtalk for different frequencies.

Block 59 comprises a step 61 for estimating a level A of ambient noise present around the telecommunication line 13 under test. In an embodiment, the ambient noise A is estimated based on typical noise conditions in a binder 35 of a given access network 11. The typical noise conditions may be determined from known characteristics of the lines 13 arranged in the binder and from the transmission technology (e.g. $ADSL_x$, VDSL2, etc.) used on the lines 13. Moreover, the number of active lines 13 in the binder 35 may be taken into account for estimating the typical noise conditions.

Moreover, block 59 comprises applying the ambient noise A to the crosstalk transfer function Hxtalk in order to obtain the noise Xtalk coupled into the line 13. This can be achieved by multiplying the spectrum of the ambient noise A with the crosstalk transfer function Hxtalk, as illustrated in Figure 3 by way of a multiplier 63.

A step 65 of the method 45 calculates an estimated attainable bitrate BR from the direct transfer function and the noise level Xtalk. Calculating the estimated attainable bitrate BR comprises applying Shannon's law. In the shown embodiment, the following approach is used in step 65 for calculating the estimated attainable bitrate BR.

A received signal power S(f) at the line is calculated from the direct transfer function $Hlog(f_i)$ and a transmitted signal power $T(f_i)$ known from the used technology and applied configuration parameters.

$$S(f_i) = T(f_i) - Hlog(f_i) \qquad\qquad (3)$$

The symbol $f_i$ refers to the center frequency of subcarrier i of the multi-carrier modulation scheme applied on the line 13.

The signal to noise ratio is obtained by subtracting the noise signal level $Xtalk(f_i)$ from the signal level $S(f_i)$.

$$SNR(f_i) = S(f_i) - Xtalk(f_i) \qquad\qquad (4)$$

The attainable bitrate can then be computed using Shannon's law under consideration of parameters specific to DSL transmission technology. Such DSL specific parameters include a noise margin NM for considering that the noise level may vary over time. A typical value for the noise margin in xDSL systems is 6 dB.

Another DSL specific parameter is a SNR gap (Gap) describing how far the used modulation scheme is from the theoretical limit of Shannon's law. A typical value for xDSL is 10 dB.

A further DSL specific parameter is the coding gain (Gain), which reflects the efficiency of the used coding method. For xDSL, the coding gain is typically around 3.5 dB in fast mode and 6.5 dB in interleaved mode.

Accordingly, the attainable bitrate per subcarrier is

$$BR_{CARRIER}(f_i) = B \cdot \log_2(1 + SNR(f_i) - NM - GAP + Gain). \qquad (5)$$

The attainable bitrate BR of the whole multicarrier system can be obtained by summing up the bitrates of the individual subcarriers.

$$BR = \sum_{i=1}^{N} B \cdot \log_2(1 + T(f_i) - Hlog(f_i) - Xtalk(f_i) - NM - Gap \\ + Gain) \qquad (6)$$

The parameters $Hlog(f_i)$ and $Xtalk(f_i)$ are calculated by step 49 and block 59, respectively. The remaining parameters are known a priory because they depend on the used modulation and coding scheme.

The embodiment of Figure 3 uses a rather simple approach for estimating the ambient noise level A based on typical noise conditions and/or the number of active lines 13 in the binder 35 in which the line 13 under test is arranged.

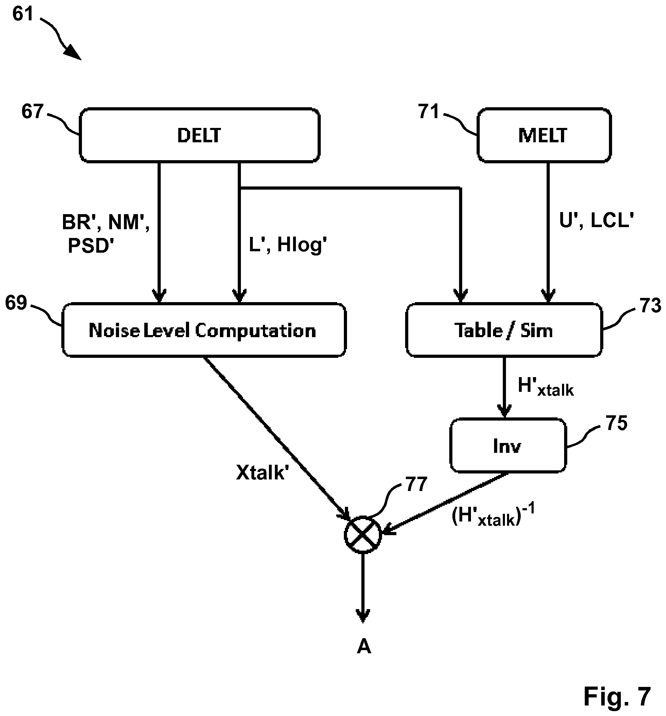

In another embodiment, a more sophisticated approach for estimating the ambient noise level A is used. In this embodiment, step 61 is carried out according to the flow chart of Figure 7. According to this embodiment, at least one further characteristic of a further telecommunication line 13 is measured and the ambient noise A around the line 13 under test is estimated based on the further characteristic. Preferably, the further telecommunication line 13 is arranged in the same binder 35 as the telecommunication under test. Moreover, the further telecommunication line 13 is a line which is connected to a DSL modem 19. As a consequence, Dual Ended Line Testing (DELT) may be performed on the further line, which is not possible on the line 13 under test because the line 13 under test is not connected to a DSL modem 19.

The further characteristic may include any operational parameter that is known a priory or can be measured by DELT in a sub step 67 of step 61. The operational parameter may include an actual bitrate BR' of the further line 13, a noise margin NM' related to the further line 13, a Power Spectral Density (PSD) of a transmitted signal, a measured loop length L' of the further line 13 and the direct transfer function Hlog' of the further line 13.

A sub step 69 of step 61 calculates the noise level Xtalk' reflecting the noise coupled into the further line. The calculations of step 69 may be performed by applying Shannon's law. For example, the above equations, e.g. equation (6), may be applied with the parameters related to the line under test 13 replaced with the further characteristics of the further telecommunication line 13. Basically, step 69 calculates the noise level Xtalk' from the bitrate BR' known from DELT performed in sub step 67, while step 65 calculates the bitrate BR from the estimated noise level Xtalk.

Block 61 has a sub step 71 comprising determining a further unbalance characteristic related to the further line 13, e.g. by using MELT. The further unbalance characteristic may be the unbalance metric U or the LCL calculated for the further line 13 and is therefore further referred to as U' and LCL'.

In a further sub step 73 of step 61, a crosstalk transfer function $H'xtalk(f_i)$ of the further line 13 is calculated from the loop length L' of the further line 13 and the unbalance characteristic U', LCL'. Sub step 73 may correspond to step 57. However, step 73 uses characteristics of the further line 13, whereas step 57 uses characteristics of the line 13 under test.

Block 61 comprises a sub step 75 that inverts the crosstalk transfer function $H'xtalk(f_i)$ of the further line 13. In element 77 - which may be a further multiplier - the ambient noise A is computed from the noise Xtalk' coupled into the further line 13 and the inverted crosstalk transfer function $(H'xtalk(f_i))^{-1}$.

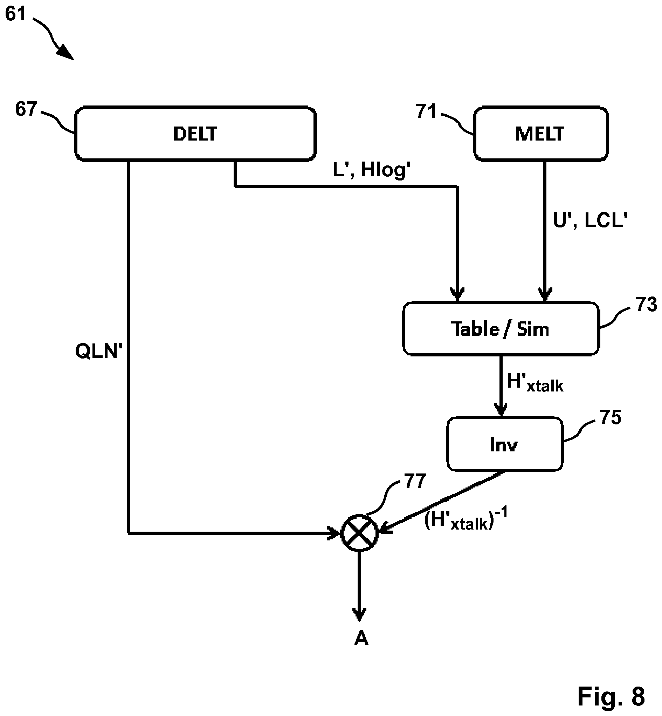

In access networks 11 according to some embodiments, the DELT procedures of sub step 67 may be adapted to measure the Quiet Line Noise (QLN) of the further telecommunication line 13 directly. The QLN corresponds at least essentially to the noise Xtalk' coupled into the further line 13. As a consequence, sub step 69 may be omitted in such embodiments. A flowchart of operations of step 61, where sub step 69 is omitted, is shown in Figure 8.

To sum up, the method 45 described herein uses a test method, e.g. MELT, that does not rely on the presence of a DSL modem 19 at the line under test for determining a characteristics of the line under test that describes the unbalance of the line. Based on this unbalance characteristic, the level of noise coupled into the line can be estimated more accurately. The attainable bitrate BR may then be estimated based on the noise level and the estimated direct transfer function by applying Shannon's law, preferably adapted to the modulation schemes used in DSL systems. By considering characteristics of the neighboring further line 13, preferably located in the same binder 35 as the line 13 under test, the ambient noise level A needed to estimate the noise Xtalk coupled into the line 13 under test may be calculated more accurately. The further line 13 may be connected to a DSL modem 19 so that more sophisticated tests including DELT may be performed on the further line 13.

It should be noted that the method 45 may be applied for estimating the attainable bitrate BR both in downstream direction as well as in upstream direction. DSL systems typically apply frequency division duplex, i.e. some subcarriers are used for downstream transmissions and other subcarriers are used for upstream transmission. The attainable bitrate BR in downstream direction may be estimated by considering only those subcarriers that are used for downstream transmissions when applying the method 45. The attainable bitrate BR in upstream direction may be estimated by considering only those subcarriers that are used for upstream transmissions when applying the method 45.

**Claims**

1. Device (43, 25, 31) for estimating an attainable bitrate of an electrical telecommunication line (13), the device being operable for

    - estimating (49) a direct transfer function (Hlog) of the telecommunication line (13) based on a length (L);
    - estimating a noise (Xtalk) coupled into the telecommunication line (13); and
    - calculating (65) a bitrate value (BR) characterizing the attainable bitrate from the transfer function (Hlog) and the noise (Xtalk);

    wherein said estimating the noise (Xtalk) comprises determining (59) the noise (Xtalk) from an unbalance characteristic (U, LCL)
    **characterized in**
    **that** the device (43, 25, 31) is further operable for

    - estimating (47) the length (L) of the telecommunication line (13) based on the first capacitance, the second capacitance and a common mode capacitance per length unit of the telecommunication line (13); and
    - determining (51) at least one unbalance characteristic (U, LCL) that describes an unbalance of the telecommunication line (13),

    wherein the at least one unbalance characteristic is a longitudinal conversion loss (LCL), which describes a ratio of a common mode signal (Vc) to a differential mode signal (Vd), the differential mode signal being measured at an end (16, 18) of the transmission line (13) while feeding the common mode signal to the same end (16, 18) of the transmission line (13).

2. Device (43, 25, 31) according to claim 1,
    wherein the device (43, 25, 31) is operable, preferably programmed, for executing a method (45) according to one of claims 4 to 11.

3. Monitoring station (39) for an access network (11) comprising an electrical telecommunication line (13),
    wherein the monitoring station (39) comprises a device (43, 25, 31) according to claim 1 or 2.

4. Method (45) for estimating an attainable bitrate of an electrical telecommunication line (13), the method (45) comprising

    - estimating (47) a length (L) of the telecommunication line (13) based on the first capacitance, the second capacitance and a common mode capacitance per length unit of the telecommunication line (13);
    - estimating (49) a direct transfer function (Hlog) of the telecommunication line (13) based on the length (L);
    - estimating a noise (Xtalk) coupled into the telecommunication line (13); and
    - calculating (65) a bitrate value (BR) characterizing the attainable bitrate from the transfer function (Hlog) and the noise (Xtalk);

    wherein the method (45) further comprises

    - determining (51) at least one unbalance characteristic (U, LCL) that describes an unbalance of the telecommunication line (13),

wherein the at least one unbalance characteristic is a longitudinal conversion loss (LCL), which describes a ratio of a common mode signal (Vc) to a differential mode signal (Vd), the differential mode signal being measured at an end (16, 18) of the transmission line (13) while feeding the common mode signal to the same end (16, 18) of the transmission line (13), and
wherein said estimating the noise (Xtalk) comprises determining (59) the noise (Xtalk) from the unbalance characteristic (U, LCL).

5.  Method (45) according to claim 4,
wherein the determining (59) the noise (Xtalk) comprises estimating (57) a crosstalk transfer function (Hxtalk) from the at least one unbalance characteristic (U, LCL).

6.  Method (45) according to claim 4 or 5,
wherein the telecommunication line (13) comprises a pair of a first conductor (a) and a second conductor (b) and wherein the method (45) comprises calculating (51) the unbalance characteristic (U) from a first capacitance of the first conductor (a) to ground (37) and a second capacitance of the second conductor (b) to ground (37).

7.  Method (45) according to one of the claims 4 to 6,
wherein the estimating the noise (Xtalk) coupled into the telecommunication line is based on an estimated ambient noise value (A), which ambient noise value (A) describes a power level of noise present around the telecommunication line (13).

8.  Method (45) according to claim 7,
wherein the method (45) comprises determining (67, 71) at least one further characteristic (BR', NM', PSD', L', Hlog', U', LCL') of a further telecommunication line (13) extending next to the telecommunication line (13), preferably within the same binder (35), and determining the ambient noise value (A) from the at least one further characteristic.

9.  Method (45) according to claim 8,
wherein the method (45) comprises computing (69) a further noise (Xtalk') coupled into the further telecommunication line (13) from the at least one further characteristic (BR', NM', PSD', L', Hlog').

10. Method (45) according to claim 8 or 9,
wherein the at least one further characteristic describes a quiet line noise (QLN') of the further telecommunication line (13) and/or the method (45) comprises using the quiet line noise (QLN') or a value derived from the quiet line noise (QLN') as the further noise (Xtalk').

11. Method (45) according to one of claims 8 to 10,
wherein the method (45) comprises estimating (73) a further crosstalk transfer function (H'xtalk) of the further line (13) based on the further characteristic (L', U', LCL') and determining the ambient noise value (A) from the further crosstalk transfer function (H'xtalk).

12. Computer program product, preferably a computer readable storage medium (29), comprising a computer program that is programmed for executing a method (45) according to one of claims 4 to 11 when run on a computer (43, 25, 31).

**Patentansprüche**

1.  Vorrichtung (43, 25, 31) zum Schätzen einer erreichbaren Bitrate einer elektrischen Telekommunikationsleitung (13), wobei die Vorrichtung betriebsfähig ist zum

    - Schätzen (49) einer direkten Transferfunktion (Hlog) der Telekommunikationsleitung (13) basierend auf einer Länge (L);
    - Schätzen eines Geräusches (Xtalk), das in die Telekommunikationsleitung (13) gekoppelt ist; und
    - Berechnen (65) eines Bitratenwerts (BR), der die erreichbare Bitrate kennzeichnet, aus der Transferfunktion (Hlog) und dem Geräusch (Xtalk);

    wobei das besagte Schätzen des Geräusches (Xtalk) das Bestimmen (59) des Geräusches (Xtalk) aus einem Unsymmetriemerkmal (U, LCL) umfasst,
**dadurch gekennzeichnet,**
**dass** die Vorrichtung (43, 25, 31) weiterhin betriebsfähig ist zum

- Schätzen (47) der Länge (L) der Telekommunikationsleitung (13) basierend auf der ersten Kapazität, der zweiten Kapazität und einer Gleichtakt-Kapazität pro Längeneinheit der Telekommunikationsleitung (13); und
- Bestimmen (51) von mindestens einem Unsymmetriemerkmal (U, LCL), das eine Unsymmetrie der Telekommunikationsleitung (13) beschreibt,

wobei das mindestens eine Unsymmetriemerkmal eine Unsymmetriedämpfung (LCL) ist, die ein Verhältnis eines Gleichtaktsignals (Vc) zu einem Differenzsignal (Vd) beschreibt, wobei das Differenzsignal an einem Ende (16, 18) der Übertragungsleitung (13) gemessen wird, während das Gleichtaktsignal am gleichen Ende (16, 18) der Übertragungsleitung (13) eingespeist wird.

2. Vorrichtung (43, 25, 31) nach Anspruch 1,
wobei die Vorrichtung (43, 25, 31) betriebsfähig, vorzugsweise programmiert, ist, um ein Verfahren (45) nach einem der Ansprüche 4 bis 11 auszuführen.

3. Überwachungsstation (39) für ein Zugangsnetzwerk (11), umfassend eine elektrische Telekommunikationsleitung (13),
wobei die Überwachungsstation (39) eine Vorrichtung (43, 25, 31) nach Anspruch 1 oder 2 umfasst.

4. Verfahren (45) zum Schätzen einer erreichbaren Bitrate einer elektrischen Telekommunikationsleitung (13), wobei das Verfahren (45) Folgendes umfasst:

- Schätzen (47) einer Länge (L) der Telekommunikationsleitung (13) basierend auf der ersten Kapazität, der zweiten Kapazität und einer Gleichtakt-Kapazität pro Längeneinheit der Telekommunikationsleitung (13);
- Schätzen (49) einer direkten Transferfunktion (Hlog) der Telekommunikationsleitung (13) basierend auf der Länge (L);
- Schätzen eines Geräusches (Xtalk), das in die Telekommunikationsleitung (13) gekoppelt ist; und
- Berechnen (65) eines Bitratenwerts (BR), der die erreichbare Bitrate kennzeichnet, aus der Transferfunktion (Hlog) und dem Geräusch (Xtalk);

wobei das Verfahren (45) weiterhin Folgendes umfasst:

- Bestimmen (51) von mindestens einem Unsymmetriemerkmal (U, LCL), das eine Unsymmetrie der Telekommunikationsleitung (13) beschreibt,

wobei das mindestens eine Unsymmetriemerkmal eine Unsymmetriedämpfung (LCL) ist, die ein Verhältnis eines Gleichtaktsignals (Vc) zu einem Differenzsignal (Vd) beschreibt, wobei das Differenzsignal an einem Ende (16, 18) der Übertragungsleitung (13) gemessen wird, während das Gleichtaktsignal am gleichen Ende (16, 18) der Übertragungsleitung (13) eingespeist wird, und
wobei das besagte Schätzen des Geräusches (Xtalk) das Bestimmen (59) des Geräusches (Xtalk) aus dem Unsymmetriemerkmal (U, LCL) umfasst.

5. Verfahren (45) nach Anspruch 4,
wobei das Bestimmen (59) des Geräusches (Xtalk) das Schätzen (57) einer Nebensprech-Transferfunktion (Hxtalk) aus dem mindestens einen Unsymmetriemerkmal (U, LCL) umfasst.

6. Verfahren (45) nach Anspruch 4 oder 5,
wobei die Telekommunikationsleitung (13) ein Paar aus einem ersten Leiter (a) und einem zweiten Leiter (b) umfasst und wobei das Verfahren (45) das Berechnen (51) des Unsymmetriemerkmals (U) aus einer ersten Kapazität des ersten Leiters (a) zur Erde (37) und einer zweiten Kapazität des zweiten Leiters (b) zur Erde (37) umfasst.

7. Verfahren (45) nach einem der Ansprüche 4 bis 6,
wobei das Schätzen des Geräusches (Xtalk), das in die Telekommunikationsleitung gekoppelt ist, auf einem geschätzten Umgebungsgeräuschwert (A) basiert, wobei der Umgebungsgeräuschwert (A) einen Leistungspegel eines Geräusches beschreibt, das um die Telekommunikationsleitung (13) vorhanden ist.

**8.** Verfahren (45) nach Anspruch 7,
wobei das Verfahren (45) das Bestimmen (67, 71) von mindestens einem weiteren Merkmal (BR', NM', PSD', L', Hlog', U', LCL') einer weiteren Telekommunikationsleitung (13) umfasst, die sich neben der Telekommunikationsleitung (13) erstreckt, vorzugsweise innerhalb des gleichen Binders (35), und das Bestimmen des Umgebungsgeräuschwerts (A) aus dem mindestens einen weiteren Merkmal.

**9.** Verfahren (45) nach Anspruch 8,
wobei das Verfahren (45) das Berechnen (69) eines weiteren Geräusches (Xtalk'), das in die weitere Telekommunikationsleitung (13) gekoppelt ist, aus dem mindestens einen weiteren Merkmal (BR', NM', PSD', L', Hlog') umfasst.

**10.** Verfahren (45) nach Anspruch 8 oder 9,
wobei das mindestens eine weitere Merkmal ein Ruherauschen (QLN') der weiteren Telekommunikationsleitung (13) beschreibt und/oder das Verfahren (45) das Verwenden des Ruherauschens (QLN') oder eines Werts, der von dem Ruherauschen (QLN') abgeleitet ist, als weiteres Geräusch (Xtalk') umfasst.

**11.** Verfahren (45) nach einem der Ansprüche 8 bis 10,
wobei das Verfahren (45) das Schätzen (73) einer weiteren Nebensprech-Transferfunktion (H'xtalk) der weiteren Leitung (13) basierend auf dem weiteren Merkmal (L', U', LCL') und das Bestimmen des Umgebungsgeräuschwerts (A) aus der weiteren Nebensprech-Transferfunktion (H'xtalk) umfasst.

**12.** Computerprogrammprodukt, vorzugsweise ein computerlesbares Speichermedium (29), umfassend ein Computerprogramm, das programmiert ist zum Ausführen eines Verfahrens (45) nach einem der Ansprüche 4 bis 11, wenn es auf einem Computer (43, 25, 31) gestartet wird.

**Revendications**

**1.** Dispositif (43, 25, 31) pour estimer un débit binaire réalisable d'une ligne de télécommunication électrique (13), le dispositif étant exploitable pour

- estimer (49) une fonction de transfert direct (Hlog) de la ligne de télécommunication (13) sur la base d'une longueur (L) ;
- estimer un bruit (Xtalk) couplé dans la ligne de télécommunication (13) ; et
- calculer (65) une valeur de débit binaire (BR) caractérisant le débit binaire réalisable à partir de la fonction de transfert (Hlog) et du bruit (Xtalk) ;

ladite estimation du bruit (Xtalk) comprenant la détermination (59) du bruit (Xtalk) à partir d'une caractéristique de déséquilibre (U, LCL)
**caractérisé en ce**
**que** le dispositif (43, 25, 31) est en outre exploitable pour

- estimer (47) la longueur (L) de la ligne de télécommunication (13) sur la base de la première capacité, de la seconde capacité et d'une capacité de mode commun par unité de longueur de la ligne de télécommunication (13) ; et
- déterminer (51) au moins une caractéristique de déséquilibre (U, LCL) qui décrit un déséquilibre de la ligne de télécommunication (13),

la au moins une caractéristique de déséquilibre étant une perte de conversion longitudinale (LCL), qui décrit un rapport d'un signal de mode commun (Vc) sur un signal de mode différentiel (Vd), le signal de mode différentiel étant mesuré à une extrémité (16, 18) de la ligne de transmission (13) tout en injectant le signal de mode commun à la même extrémité (16, 18) de la ligne de transmission (13).

**2.** Dispositif (43, 25, 31) selon la revendication 1,
le dispositif (43, 25, 31) étant exploitable, de préférence programmé, pour exécuter un procédé (45) selon l'une des revendications 4 à 11.

**3.** Station de surveillance (39) pour un réseau d'accès (11) comprenant une ligne de télécommunication électrique (13), la station de surveillance (39) comprenant un dispositif (43, 25, 31) selon la revendication 1 ou 2.

**4.** Procédé (45) pour estimer un débit binaire réalisable d'une ligne de télécommunication électrique (13), le procédé (45) comprenant les étapes suivantes

- estimer (47) une longueur (L) de la ligne de télécommunication (13) sur la base de la première capacité, de la seconde capacité et d'une capacité de mode commun par unité de longueur de la ligne de télécommunication (13) ;
- estimer (49) une fonction de transfert direct (Hlog) de la ligne de télécommunication (13) sur la base de la longueur (L) ;
- estimer un bruit (Xtalk) couplé dans la ligne de télécommunication (13) ; et
- calculer (65) une valeur de débit binaire (BR) caractérisant le débit binaire réalisable à partir de la fonction de transfert (Hlog) et du bruit (Xtalk) ;

le procédé (45) comprenant en outre l'étape suivante

- déterminer (51) au moins une caractéristique de déséquilibre (U, LCL) qui décrit un déséquilibre de la ligne de télécommunication (13),

la au moins une caractéristique de déséquilibre étant une perte de conversion longitudinale (LCL), qui décrit un rapport d'un signal de mode commun (Vc) sur un signal de mode différentiel (Vd), le signal de mode différentiel étant mesuré à une extrémité (16, 18) de la ligne de transmission (13) tout en injectant le signal de mode commun à la même extrémité (16, 18) de la ligne de transmission (13), et ladite estimation du bruit (Xtalk) comprenant la détermination (59) du bruit (Xtalk) à partir de la caractéristique de déséquilibre (U, LCL).

**5.** Procédé (45) selon la revendication 4,
dans lequel la détermination (59) du bruit (Xtalk) comprend l'estimation (57) d'une fonction de transfert de diaphonie (Hxtalk) à partir de la au moins une caractéristique de déséquilibre (U, LCL).

**6.** Procédé (45) selon la revendication 4 ou 5,
dans lequel la ligne de télécommunication (13) comprend une paire d'un premier conducteur (a) et d'un second conducteur (b) et le procédé (45) comprenant le calcul (51) de la caractéristique de déséquilibre (U) à partir d'une première capacité du premier conducteur (a) à la masse (37) et d'une seconde capacité du second conducteur (b) à la masse (37).

**7.** Procédé (45) selon l'une des revendications 4 à 6,
dans lequel l'estimation du bruit (Xtalk) couplé dans la ligne de télécommunication est basée sur une valeur de bruit ambiant estimée (A), laquelle valeur de bruit ambiant (A) décrit un niveau de puissance de bruit présent autour de la ligne de télécommunication (13).

**8.** Procédé (45) selon la revendication 7,
le procédé (45) comprenant la détermination (67, 71) d'au moins une caractéristique supplémentaire (BR', NM', PSD', L', Hlog', U', LCL') d'une ligne de télécommunication supplémentaire (13) s'étendant à côté de la ligne de télécommunication (13), de préférence à l'intérieur du même liant (35), et la détermination de la valeur de bruit ambiant (A) à partir de la au moins une caractéristique supplémentaire.

**9.** Procédé (45) selon la revendication 8,
le procédé (45) comprenant le calcul (69) d'un bruit supplémentaire (Xtalk') couplé dans la ligne de télécommunication supplémentaire (13) à partir de la au moins une caractéristique supplémentaire (BR', NM', PSD', L', Hlog').

**10.** Procédé (45) selon la revendication 8 ou 9,
dans lequel la au moins une caractéristique supplémentaire décrit un bruit de ligne discret (QLN') de la ligne de télécommunication supplémentaire (13) et/ou le procédé (45) comprend l'utilisation du bruit de ligne discret (QLN') ou d'une valeur dérivée du bruit de ligne discret (QLN') comme le bruit supplémentaire (Xtalk').

**11.** Procédé (45) selon l'une des revendications 8 à 10,
le procédé (45) comprenant l'estimation (73) d'une fonction de transfert de diaphonie supplémentaire (H'xtalk) de la ligne supplémentaire (13) sur la base de la caractéristique supplémentaire (L', U', LCL') et la détermination de la valeur de bruit ambiant (A) à partir de la fonction de transfert de diaphonie supplémentaire (H'xtalk).

12. Produit de programme informatique, de préférence un support de stockage lisible par ordinateur (29), comprenant un programme informatique qui est programmé pour exécuter un procédé (45) selon l'une des revendications 4 à 11 lorsqu'il est exécuté sur un ordinateur (43, 25, 31).

**Fig. 1**

**Fig. 2**

**Fig. 4**

Fig. 3

**Fig. 5**

**Fig. 6**

Fig. 7

61

67 — DELT

71 — MELT

L', Hlog'

U', LCL'

QLN'

Table / Sim — 73

$H'_{xtalk}$

Inv — 75

77

$(H'_{xtalk})^{-1}$

⊗

A

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006039419 A1

- WO 2011065945 A1